Europäisches Patentamt

European Patent Office

Office européen des brevets

(19)

(11) Numéro de publication: **0 120 738 B2**

(12) **NOUVEAU FASCICULE DE BREVET EUROPEEN**

(45) Date de publication du nouveau fascicule du brevet: **12.12.90**

(51) Int. Cl.⁵: **F 16 D 55/224**

(21) Numéro de dépôt: **84400355.8**

(22) Date de dépôt: **22.02.84**

(54) Frein à disque à étrier coulissant.

(30) Priorité: **25.02.83 FR 8303136**

(43) Date de publication de la demande:
**03.10.84 Bulletin 84/40**

(45) Mention de la délivrance du brevet:
**21.01.87 Bulletin 87/04**

(45) Mention de la decision concernant l'opposition:
**12.12.90 Bulletin 90/50**

(84) Etats contractants désignés:
**DE FR GB IT NL SE**

(56) Documents cités:
**DE-A-2 649 843**
**DE-A-2 850 439**
**FR-A-2 289 799**
**FR-A-2 417 679**
**GB-A-1 148 525**
**GB-A-1 563 213**
**US-A-3 970 172**
**US-A-4 319 668**

(73) Titulaire: **BENDIX France**
**126, rue de Stalingrad**
**F-93700 Drancy (FR)**

(72) Inventeur: **Bejot, Philippe**
**74, rue de Miromesnil**
**F-75008 Paris (FR)**
Inventeur: **Knuchel, Pierre**
**15, Allée des Ormes**
**F-77910 Germigny L'Eveque (FR)**
Inventeur: **Laurent, Jacques**
**154 rue des Berthauds**
**F-93110 Rosney sous Bois (FR)**

(74) Mandataire: **Lejet, Christian et al**
**BENDIX FRANCE Division Technique Service**
**Brevets Bendix Europe 126 rue de Stalingrad**
**F-93700 Drancy (FR)**

Courier Press, Leamington Spa, England.

**Description**

L'invention a pour objet un frein à disque à étrier coulissant; notamment pour véhicule automobile, correspondant au préambule de la revendication 1. L'invention concerne plus particulièrement un frein à disque à étrier monté coulissant par l'intermédiaire de deux colonnettes axiales sur un support fixe, des moyens d'actionnement étant associés audit étrier pour solliciter directement un premier élément de friction contre une première face du disque et, par réaction au travers de l'étrier coulissant, un second élément de friction contre l'autre face du disque, lesdites colonnettes étant solidaires de l'étrier et traversant des alésages de guidage et de coulissement formés dans ledit support fixe.

Un frein de ce type est décrit dans le brevet FR—A—2 289 799. Ce brevet décrit un frein à disque comportant un étrier coulissant dont une portion centrale passe au-dessus du disque de manière à recevoir un élément de friction destiné à être appliqué contre le disque tournant lorsque ledit étrier coulisse le long de colonnettes fixes par rapport à l'étrier placées de part et d'autre de ladite portion centrale et passant à travers des alésages de coulissement et de guidage formés dans les bras circonférentiellement espacés d'un support fixe. Ces bras sont reliés entre eux, au niveau de leur base, par une portion du support fixe formant poutre et servant de moyen de transmission des efforts de freinage reçus par l'un ou l'autre bras, selon le sens de rotation du disque. L'étrier, de son côté, comprend en plus de la portion centrale ci-dessus mentionnée deux portions circonférentielles placées de part et d'autre du disque, ces portions constituant avec les colonnettes précitées d'autres moyens de transmission des efforts de freinage. Ce frein présente néanmoins l'inconvénient de nécessiter le démontage d'une colonnette et la rotation de l'étrier autour de l'autre colonnette afin de pouvoir procéder au remplacement des éléments de friction. Cette opération, bien que simple, présente des risques de détérioration de la qualité de coulissement de l'étrier, par exemple par pollution des zones de contact et de coulissement, et également le risque de détérioration de la conduite d'amenée de liquide de frein située entre le maître-cylindre du véhicule par exemple et le moteur de frein associé à l'étrier.

On a également propose (voir GB—A—1 563 213) un frein du type mentionné ci-dessus dans lequel l'étrier présente une ouverture centrale permettant l'extraction radiale des éléments de friction. Néanmoins, ce frein présente l'inconvénient de ne charger qu'un seul des alésages de guidage et donc le seul bras du support fixe dans lequel cet alésage est formé, pour chaque sens de rotation du disque. Ceci nécessite d'avoir des bras suffisamment résistants, volumineux et lourds pour supporter la totalité du couple engendré lors de l'opération de freinage.

L'invention a pour objet de proposer un frein à disque à étrier coulissant dans lequel de tels inconvénients sont évités. Ce but est atteint, conformément à l'invention, par un frein défini par les éléments caractéristiques des revendications, c'est-à-dire un frein à disque du genre comprenant un étrier monté coulissant par l'intermédiaire de deux colonnettes axiales sur un support fixe, des moyens d'actionnement associés audit étrier pour solliciter directement un premier élément de friction contre une première face du disque et par réaction au travers de l'étrier coulissant un second élément de friction contre l'autre face du disque, lesdites colonnettes étant solidaires de l'étrier et traversant des alésages de guidage et de coulissement formés dans deux bras circonférentiellement espacés du support fixe, ledit étrier comportant autour d'une ouverture centrale destinée à permettre l'extraction radiale des éléments de friction des premiers moyens de transmission de force situés dans un plan perpendiculaire à celui du disque et comprenant d'une part lesdites colonnettes et d'autre part une première portion de l'étrier placée d'un côté du disque ainsi qu'une deuxième portion de l'étrier placée de l'autre côté de ce disque, et ledit support fixe comportant des seconds moyens de transmission de force situés dans un plan parallèle à celui du disque et comprenant une portion du support fixe formant poutre et reliant entre eux à leur base lesdits bras circonférentiellement espacés grâce au fait que lesdits seconds moyens de transmission de force incluent en outre un élément formant poutre qui est radialement espacé de la portion du support fixe précitée, disposé dans le même plan que celui-ci et espacé de celui du disque et qui relie entre elles les extrémités desdits bras, cedit élément participant à la transmission à l'un des bras d'une partie des efforts de freinage subis par l'autre quel que soit le sens de rotation du disque, les portions de support fixe et élément formant poutre définissant entre eux une ouverture au travers le laquelle les moyens d'actionnement peuvent s'engager pour solliciter le premier élément de friction. Avec cet agencement, quel que soit le sens de rotation du disque, les efforts engendrés lors d'un freinage seront répartis sur les deux bras du support fixe permettant d'alléger considérablement ceux-ci, chacun d'eux ne recevant qu'une part du couple engendré lors du freinage.

On décrira maintenant à titre d'exemple non limitatif un mode de réalisation de l'invention en se référant aux figures annexées, dans lesquelles:

la figure 1 est une vue de dessus d'un frein à disque réalisé conformément à l'invention;

la figure 2 est une vue de face avec une coupe partielle selon la ligne 2—2 de la figure 1;

la figure 3 est une vue en coupe selon la ligne 3—3 de la figure 2;

la figure 4 est une vue en coupe selon la ligne 4—4 de la figure 2.

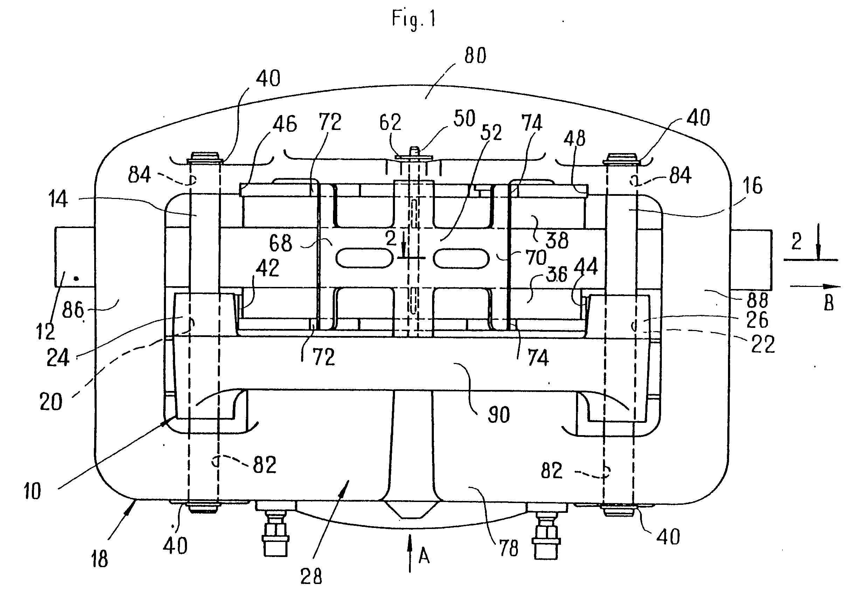

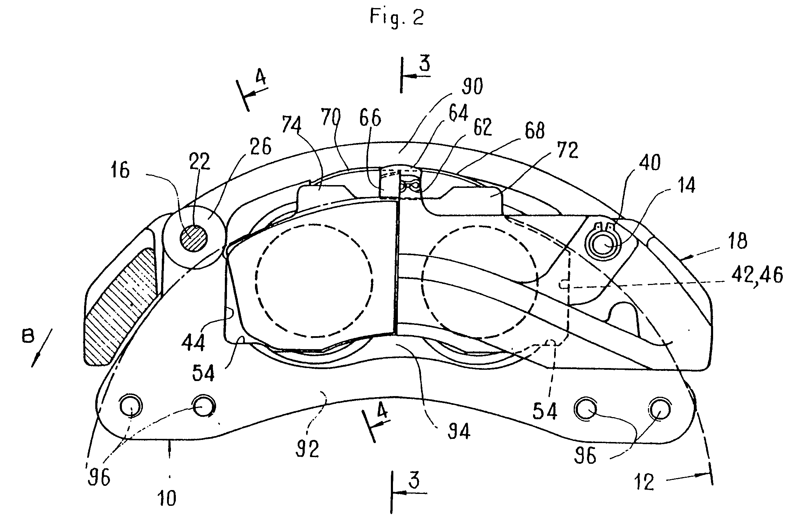

Le frein à disque représenté sur les figures 1 à 4 comporte un support fixe 10 prévu pour être associé à une partie fixe du véhicule (non représentée) et constitué, dans le mode de réalisation représenté, par une plaque disposée au voisinage d'un disque 12 prévu pour être associé en rotation avec une roue du véhicule (non représentée). Le support fixe 10 reçoit en coulissement, au moyen de deux colonnettes axiales circonférentiellement espacées 14 et 16, un étrier mobile 18 chevauchant le disque. Les axes des colonnettes 14 et 16 sont sensiblement parallèles à l'axe de rotation du disque 12. Comme on le voit plus particulièrement sur la figure 1, les colonnettes 14 et 16 sont fixes par rapport à l'étrier 18 et passent dans des alésages 20 et 22 formés dans des bras 24 et 26 respectivement du support fixe 10. L'étrier 18 comporte classiquement des moyens d'actionnement 28 constitués par un moteur de frein hydraulique, dans le mode de réalisation représenté, celui-ci porte un moteur double, chacun d'eux comportant un piston 30 monté coulissant dans un alésage 32 défini dans l'étrier 18 et sensible à la pression régnant dans une chambre de commande 34 susceptible d'être reliée à une source de pression telle que par exemple, le maître-cylindre du véhicule (non représenté). Les pistons 30 sont disposés de façon à solliciter directement un premier élément de friction ou élément intérieur 36 contre une première face du disque 12 lorsque le fluide sous pression est admis dans la chambre 34. Par réaction, l'étrier 18 se déplace axialement en coulissement avec ces colonnettes 14, 16 passant dans les alésages 20 et 22 pour solliciter un second élément de friction ou élément extérieur 38 contre l'autre face du disque 12. En se reportant aux figures 1 et 2 on voit que les colonnettes 14 et 16 sont solidaires de l'étrier 18 et fixes par rapport à celui-ci au moyen de circlips 40 à chacune des extrémités de chacune des colonnettes 14 et 16. L'élément de friction intérieur 36 est supporté en coulissement et en ancrage par des bords axiaux circonférentiellement espacés 42, 44 formés sur les bras 24 et 26 du support fixe 10. L'élément de friction extérieur 38 est reçu en ancrage sur des bords axiaux circonférentiellement espacés 46 et 48 formés sur l'étrier 18. Un axe 50 maintient les éléments de friction intérieur et extérieur par rapport à l'étrier 18 et au support fixe 10 au travers d'un ressort 52 qui sollicite radialement vers l'intérieur les éléments de friction pour les maintenir en appui sur des butées radiales 54 formées sur l'étrier 18 et le support fixe 10 au droit des bords axiaux circonférentiellement espacés 42, 44, 46 et 48. D'une façon conventionnelle, l'axe 50 traverse des perçages 56 et 58 formés dans l'étrier 18 de part et d'autre du disque 12, l'axe 50 étant immobilisé par rapport à l'étrier 18 au moyen d'une tête 60 formée à une de ses extrémités et placée du côté du moteur de frein 28 et au moyen d'une épingle 62 placée à son autre extrémité. Le ressort 52 est maintenu par l'axe 50 au moyen de perçages formés dans des pattes rabattues 64 et 66 placées de part et d'autre du disque 12. Le ressort 52 s'étend circonférentiellement de part et d'autre de l'axe 50 et présente des bras 68 et 70 qui sollicitent radialement vers l'intérieur les éléments de friction au travers de saillies 72 et 74 formées sur ces éléments de friction.

En se reportant à la figure 1, on voit que l'étrier 18 comporte une première portion 78 placée du côté du moteur de frein et s'étendant parallèlement au plan du disque et une deuxième portion 80 placée de l'autre côté du disque 12. Les colonnettes 14 et 16 coopèrent avec chacune des portions de l'étrier 78 et 80 au moyen d'alésages 82 et 84 réalisés respectivement dans les portions 78 et 80. Les portions d'étrier 78 et 80 ainsi que les colonnettes 14 et 16 formant les premiers moyens de transmission de force, ceux-ci comportent en outre les portions axiales 86 et 88 qui s'étendent au-dessus de la périphérie du disque et relient également les portions 78 et 80 de l'étrier 18. Comme on le voit sur la figure 1, les portions 78 et 80 d'une part, les portions 86, 88 ainsi que les deux colonnettes 14 et 16 d'autre part sont placées dans un plan sensiblement perpendiculaire au plan du disque 12.

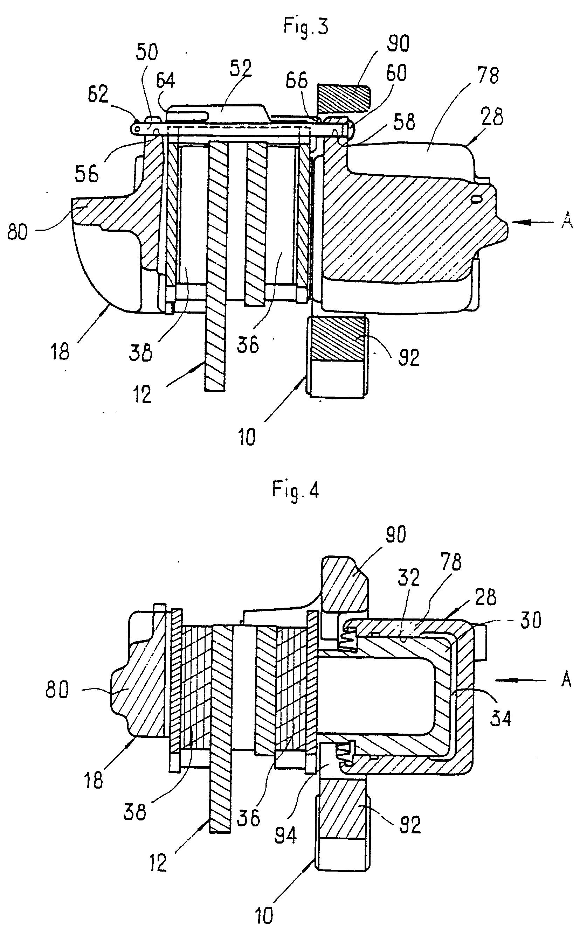

En se reportant aux figures 1 à 4, on voit que les bras 24 et 26 du support fixe 10 sont reliés par deux poutres 90 et 92 formant entre elles une ouverture 94 au travers de laquelle passent le moteur de frein 28 et les pistons 30 de façon à pouvoir solliciter l'élément de friction 36 comme on le voit plus particulièrement sur les figures 3 et 4, les poutres 90 et 92 forment les seconds moyens de transmission de force entre les bras 24 et 26 et sont placées dans un plan sensiblement parallèle au plan du disque 12.

Dans le mode de réalisation représenté, on voit que la portion d'étrier 78 est directement formée par les moyens d'actionnement ou moteur de frein 28.

Le frein qui vient d'être décrit au moyen des figures 1 à 4 fonctionne de la façon suivante:

lorsque du fluide sous pression est admis dans les chambres 34 les pistons 30 coulissent à l'intérieur des alésages 32 et sollicitent dans le sens de la flèche A des figures 1, 3 et 4, l'élément de friction intérieur 36 en appui sur la face correspondante du disque 12. Par réaction, l'étrier 18 coulisse avec ses colonnettes 14 et 16 par rapport au support fixe 10 dans le sens inverse à la flèche A de manière à appliquer au moyen de la portion 80, l'élément de friction 38 sur l'autre face du disque 12. Si on désigne par la flèche B le sens de rotation en marche avant du disque 12 sur les figures 1 et 2, on voit que l'élément de friction intérieur 36 prend appui sur le bord 44 et l'élément extérieur prend appui sur le bord 48. Les forces engendrées par la friction entre les éléments de friction et le disque tendent à déplacer d'une part le bras 26 dans le sens de la flèche B du fait de l'élément de friction 36 et sollicitent l'étrier 18 également dans le sens de la flèche B du fait de l'élément de friction 38. L'étrier 18 au travers de sa colonnette 16 sollicite donc également le bras 26 dans le sens de la flèche B. Le bras 26 tend donc à fléchir dans le sens de la flèche B sous l'effet des efforts dus au patin 36 et à l'étrier 18.

La flexion du bras 26 est limitée d'une part par les poutres 90 et 92 qui reportent sur le bras 24 les efforts reçus sur le bras 26; et d'autre part par la colonnette 16 qui par ses alésages 82 et 84 sollicite les portions 78 et 80 dans le sens de la flèche B et donc la colonnette 14 au travers des alésages 82 et 84 correspondants, la colonnette 14 qui prend appui sur l'alésage 20 du bras 24 dans le sens de la flèche B et reporte ainsi sur ce bras 24 une partie des efforts reçus par le bras 26.

On voit ainsi que grâce à l'invention, c'est-à-dire aux deux poutres 90 et 92 du support fixe d'une part et à la structure de l'étrier 18 formé par les portions 78, 80 et les colonnettes 14, 16, les deux bras 24 et 26 se répartissent les forces engendrées par la friction des éléments de friction sur le disque. On conçoit que les portions 86 et 88 chevauchant le disque participent à la rigidification de l'étrier et par conséquent participent à la transmission des forces d'un bras sur l'autre.

Il est bien évident que si le disque 12 tourne dans le sens inverse, la répartition des efforts se fera d'une façon équivalente.

La répartition systématique des efforts entre les deux bras 24, 26 du support fixe 10 permet de réduire l'encombrement et le poids du support fixe mais également de diminuer les colonnettes 14 et 16, celles-ci ne recevant jamais la totalité des efforts engendrés par l'élément de friction 38.

L'invention permet donc d'avoir un frein allégé et donc plus économique pour un même couple de freinage engrendré.

Dans un mode de réalisation non représenté, la poutre 92 du support fixe 10 n'est pas réalisée monobloc avec le reste du support fixe mais est formée par une partie fixe du véhicule (non représentée) sur laquelle est boulonné le support fixe 10 au moyen des trous taraudés 96. Entre cette partie fixe du véhicule et la poutre 90 subsiste l'ouverture 94 assurant les passages des moteurs de frein 28.

L'invention n'est pas limitée au mode de réalisation représenté et des modifications peuvent y être apportées sans sortir du cadre de l'invention, en particulier le moteur de frein 28 peut être rapporté sur une poutre 78 et non réalisé monobloc comme représenté sur le mode de réalisation décrit. De même les éléments de friction 36 et 38 peuvent être maintenus par rapport à l'étrier ou au support fixe au moyen de plusieurs axes 50 ou tout autre moyen équivalent sans sortir pour cela du cadre de l'invention.

**Revendications**

1. Frein à disque à étrier (18) monté coulissant par l'intermédiaire de deux colonnettes axiales (14, 16) sur un support fixe (10), des moyens d'actionnement (28) étant associés audit étrier pour solliciter directement un premier élément de friction (36) contre une première face du disque (12) et par réaction au travers de l'étrier coulissant un second élément de friction (38) contre l'autre face du disque (12), lesdites colonnettes (14, 16) étant solidaires de l'étrier et traversant des alésages de guidage et de coulissement (20, 22) formés dans deux bras (24, 26) circonférentiellement espacés du support fixe (10) ledit étrier (18) comportant des premiers moyens de transmission de force (78, 80; 14, 16) situés dans un plan perpendiculaire à celui du disque et comprenant d'une part lesdites colonnettes (14, 16) et d'autre part une première portion (78) de l'étrier placée d'un côté du disque ainsi qu'une deuxième portion (80) de l'étrier placée de l'autre côté de ce disque, et ledit support fixe (10) comportant des seconds moyens de transmission de force situés dans un plan parallèle à celui du disque et comprenant une portion (92) du suport fixe formant poutre et reliant entre eux à leur base lesdits bras circonférentiellement espacés (24, 26), caractérisé en ce que lesdits seconds moyens de transmission de force incluent en outre un élément (90) formant poutre qui est radialement espacé de la portion du support fixe précitée (92), disposé dans le même plan axial que celui-ci, espacé de celui du disque, et qui relie entre elles les extrémités desdits bras (24, 26), cedit élément participant à la transmission à l'un des bras d'une partie des efforts de freinage subis par l'autre quel que soit le sens de rotation du disque, et permettant l'extraction radiale des éléments de friction (36, 38) à travers une ouverture pratiquée dans l'étrier (18), les portions de support fixe (92) et élément (90) formant poutres définissant entre eux une ouverture (94) au travers de laquelle les moyens d'actionnement (28) peuvent s'engager pour solliciter ledit premier élément de friction (36).

2. Frein à disque selon la revendication 1, caractérisé en ce que l'une des poutres (90, 92) est formée par une partie fixe du véhicule sur laquelle est fixé le support fixe (10).

3. Frein à disque selon l'une des revendications 1 à 2, caractérisé en ce que lesdits premiers moyens de transmission de force comportent en outre deux portions axiales (86, 88) de l'étrier s'étendant axialement au-dessus de la périphérie du disque (12) et reliant entre elles les première (78) et deuxième (80) portions de l'étrier (18).

**Patentansprüche**

1. Scheibenbremse mit einem Bremssattel (18), der über zwei axiale Bolzen (14, 16) an einem Bremsträger (10) gleitend gelagert ist, wobei dem Bremssattel Betätigungsmittel (28) zugeordnet sind, die unmittelbar einen ersten Reibkörper (36) gegen eine erste Seite der Bremsscheibe (12) und mittelbar über den schwimmenden Bremssattel einen zweiten Reibkörper (38) gegen die andere Seite der Bremsscheibe (12) andrücken, wobei die Bolzen (14, 16) am Bremssattel festgelegt sind und Führungs- und Gleitbohrungen (20, 22) durchdringen, die in zwei in Umfangsrichtung beabstandeten Armen (24, 26) des Bremsträgers (10) gebildet sind, wobei der Bremssattel (18) erste Kraft übertragende Mittel (78, 80; 14, 16) umfaßt, die in einer zur Bremsscheibenebene senkrechten Ebene angeordnet sind und einerseits die Bolzen (14, 16) und andererseits einen ersten Abschnitt (78) des Bremssattels auf einer Seite der Bremsscheibe sowie einen zweiten Abschnitt (80) des Bremssattels auf der anderen Seite der Bremsscheibe umfassen, und der Bremsträger (10) zweite Kraft übertragende Mittel aufweist, die in einer zur Bremsscheibenebene parallelen Ebene angeordnet sind und einen einen Verbindungsbalken bildenden Abschnitt (92) des Bremsträgers umfaßt, welcher die in Umfangsrichtung beabstandeten Arme (24, 26) an ihrer Basis miteinander verbindet, dadurch gekennzeichnet, daß die zweiten Kraft übertragenden Mittel außerdem ein einen Verbindungsbalken bildendes Teil (90) umfassen, das von dem besagten Abschnitt (92) des Bremsträgers radial beabstandet ist, in der gleichen Ebene wie dieser angeordnet ist, welche zu der der Bremsscheibe beabstandet ist, und das die Enden der Arme (24, 26) untereinander verbindet, wobei dieses Teil unabhängig von der Drehrichtung der Bremsscheibe an der Übertragung eines Teils der Bremskräfte von einem der Arme auf den anderen teilnimmt und den radialen Ausbau der Reibkörper (36, 38) durch eine im Bremssattel (18) vorgesehene Öffnung zuläßt, und daß der einen Verbindungsbalken bildende Abschnitt des Bremsträgers (92) und das einen Verbindungsbalken bildende Teil (90) zwischen sich eine Öffnung (94) bilden, durch die sich die Betätigungsmittel (28) hindurcherstrecken können, um auf den ersten Reibkörper (36) einzuwirken.

2. Scheibenbremse nach Anspruch 1, dadurch gekennzeichnet, daß einer der Verbindungsbalken (90, 92) von einem ortsfesten Fahrzeugteil gebildet wird, an dem der Bremsträger (10) befestigt ist.

3. Scheibenbremse nach einem der Ansprüche 1 bis 2, dadurch gekennzeichnet, daß die ersten Kraft übertragenden Mittel außerdem zwei axiale Abschnitte (86, 88) des Bremssattels umfassen, die sich axial über den Umfang der Bremsscheibe (12) erstrecken und den ersten (78) und zweiten (80) Abschnitt des Bremssattels (18) miteinander verbinden.

**Claims**

1. A disk brake including a caliper (18) slidingly mounted by means of two axial columns (14, 16) on a fixed support (10), actuating means (28) being associated with the caliper to urge directly a first friction member (36) against a first face of the disk (12) and by reaction via the sliding caliper a second friction member (38) against the other face of the disk (12), said columns (14, 16) being fixed to the caliper and traversing guiding and sliding bores (20, 22) provided in two circumferentially spaced arms (24, 26) of the fixed support (10), said caliper (18) comprising first force transmitting means (78, 80; 14, 16) situated in a plane perpendicular to that of the disk and comprising on the one hand said columns (14, 16) and on the other hand a first portion (78) of the caliper disposed on one side of the disk as well as a second portion (80) of the caliper disposed on the other side of the disk, and said fixed support (10) comprising second force transmitting means situated in a plane parallel to that of the disk and comprising a beam-forming portion (92) of the fixed support connecting said circumferentially spaced arms (24, 26) to each other at their basis, characterized in that said second force transmitting means further include a beam-forming element (90) which is radially spaced from said portion (92) of the fixed support, located in the same axial plane than this last, spaced apart from the disk and which connects the ends of said arms (24, 26) to each other, said element participating in said transmission of a portion of the brake forces from one of the arms to the other of the arms irrespective of the sense of rotation of the disk, and permitting radial removal of the friction members (36, 38) through an opening in the caliper (18), the beam-forming portion of the fixed support (92) and the beam-forming element (90) defining between them an opening (94) through which the actuating means (28) may extend to act upon said first friction member (36).

2. The disk brake of claim 1, characterized in that one of the beams (90, 92) is formed by a fixed portion of the vehicle to which the fixed support (10) is fixed.

3. The disk brake according to any of claims 1 to 2, characterized in that said first force transmitting means further comprise two axial portions (86, 88) of the caliper, which axially extend beyond the periphery of the disk (12) and connect the first (78) and second (80) portions of the caliper (18) to each other.

Fig.1

Fig. 2

Fig. 3

Fig. 4